# EUROPÄISCHE PATENTSCHRIFT

(11) **EP 4 088 089 B1**
(45) Veröffentlichungstag und Bekanntmachung des Hinweises auf die Patenterteilung: **08.11.2023**
(21) Anmeldenummer: 20838448.7
(22) Anmeldetag: 18.12.2020
(51) Int. Cl.: G01D 5/244, G01L 1/00, B62D 1/00, G01D 11/24, G01L 5/22, B62D 6/10, B62D 15/02

(54) **DREHWINKELSENSOR ZUR BESTIMMUNG EINES DREHWINKELS UND/ODER EINES DREHMOMENTS**
ROTARY ANGLE SENSOR FOR DETERMINING A ROTARY ANGLE AND/OR A TORQUE
CAPTEUR D'ANGLE DE ROTATION POUR DÉTERMINER UN ANGLE DE ROTATION ET/OU UN COUPLE

(30) Priorität: 09.01.2020 DE 102020100319
(43) Veröffentlichungstag der Anmeldung: 16.11.2022
(73) Patentinhaber: HELLA GMBH & CO. KGAA, 59552 Lippstadt (DE)
(72) Erfinder: HOPPE, Steffen, 59555 Lippstadt (DE); OBERSTE-FRIELINGHAUS, Holger, 33617 Bielefeld (DE); PANKOKE, Martin, 33098 Paderborn (DE); WIRRIES, Eckart, 59556 Lippstadt (DE)
(74) Vertreter: Bringemeier, Ulrich Heinz
(86) Internationale Anmeldenummer: PCT/EP2020/087049
(87) Internationale Veröffentlichungsnummer: WO 2021/140006

(56) Entgegenhaltungen:
- DE-A1-102009 045 435
- DE-A1-102012 021 137
- DE-A1-102012 105 963
- DE-A1-102012 105 966

## Beschreibung

Die vorliegende Erfindung bezieht sich auf einen Drehwinkelsensor zur Bestimmung eines Drehwinkels und/oder eines Drehmoments der im Oberbegriff des Anspruchs 1 genannten Art.

Derartige Drehwinkelsensoren sind aus dem Stand der Technik in zahlreichen Ausführungsvarianten bereits bekannt. Beispielsweise offenbart die DE 10 2012 105 963 A1 einen Drehwinkelsensor zur Bestimmung einer relativen Winkelstellung bezüglich einer Referenzposition, umfassend ein Gehäuse, mindestens einen Rotor, der drehbar in dem Gehäuse gelagert ist und eine Leiterplatte mit elektrischen und/oder elektronischen Bauteilen sowie einem oder mehreren Statoren, entsprechend der Anzahl der Rotoren. Der bekannte Drehwinkelsensor soll unter anderem eine präzise Ausrichtung eines ersten der Rotoren zu dem Stator gewährleisten. Dies wird dadurch erreicht, dass ein erster der Rotoren ohne Spiel mit dem Gehäuse verrastet wird, wobei ein Federring mit Vorspannung auf Rastarmen angeordnet ist.

Aus der DE 10 2012 105 966 A1 ist ein Drehwinkelsensor mit einem Gehäuse bekannt, wobei in dem Sensorgehäuse eine Leiterplatte mit einem Stator und ein drehbar gelagerter Rotor angeordnet ist. Am Sensorgehäuse ist ein Verbindungsbauteil angeordnet, das eine Verdrehsicherung des Gehäuses gegenüber Kraftfahrzeugteilen in der Einbauposition bewirkt.

Aus der DE 10 2012 021 137 A1 ist eine Sensoreinrichtung zum Messen der Rotation einer Welle bekannt. Diese Sensoreinrichtung weist einen zylindrischen Halter auf, der drehfest mit der Welle verbunden ist, sowie ein zylindrisches Statorteil, das über einen Befestigungsring an dem Halter festgelegt wird.

Aus der DE 10 2009 045 435 A1 ist ein Drehmomentsensor bekannt, bei dem für die Festlegung eines ringförmigen Sensorbauteils an einer Welle ein Sicherungsring vorgesehen ist.

Hier setzt die vorliegende Erfindung an.

Der vorliegenden Erfindung liegt die Aufgabe zugrunde, einen Drehwinkelsensor zur Bestimmung eines Drehwinkels und/oder eines Drehmoments zu verbessern.

Diese Aufgabe wird durch einen Drehwinkelsensor mit den Merkmalen des Anspruchs 1 gelöst, der dadurch gekennzeichnet ist, dass der Sicherungsring integraler Bestandteil der Rotorbaugruppe ist und mindestens ein Sicherungselement aufweist, mit dem der Sicherungsring in dessen Sicherungslage die Verbindung von Rotor und Gehäuse sichert, und wobei der Sicherungsring und die Rotorrastvorrichtung jeweils zueinander korrespondierende Rastelemente und die Rotorbaugruppe axiale Lagesicherungselemente aufweisen, und wobei die Rastelemente in der Sicherungslage des Sicherungsrings derart zusammenwirken, dass der Sicherungsring in axialer Richtung entlang der Drehachse relativ zu dem Rotor festgelegt ist, und wobei die axialen Lagesicherungselemente in der Sicherungslage des Sicherungsrings derart zusammenwirken, dass der Rotor in axialer Richtung entlang der Drehachse an dem Gehäuse im Wesentlichen spielfrei festgelegt ist. Der Begriff "Rastelemente" ist hier weit auszulegen und umfasst auch Einpresselemente. Die Unteransprüche betreffen vorteilhafte Weiterbildungen der Erfindung.

Ein wesentlicher Vorteil des erfindungsgemäßen Drehwinkelsensors liegt insbesondere darin, dass der Drehwinkelsensor verbessert ist. Beispielsweise ist der erfindungsgemäße Drehwinkelsensor auf einfachere und kostengünstigere Weise herstellbar, da ein Fügen eines als separater Federring ausgebildeten Sicherungsrings wie auch ein Verschweißen eines als Haltering ausgebildeten Sicherungsrings entfällt. Ferner gewährleistet das mindestens eine Sicherungselement des Sicherungsrings in Kombination mit den axialen Lagesicherungselementen der Rotorbaugruppe zum einen eine sichere Verbindung des Rotors mit dem Gehäuse und zum anderen eine im Wesentlichen spielfreie axiale Festlegung des Rotors an dem Gehäuse.

Eine vorteilhafte Weiterbildung des erfindungsgemäßen Drehwinkelsensors sieht vor, dass das Gehäuse eine zu der Rotorrastvorrichtung des Rotors korrespondierende Gehäuserastvorrichtung aufweist, wobei der Rotor und das Gehäuse mittels der Rotorrastvorrichtung und der Gehäuserastvorrichtung in der Montagelage des Rotors miteinander verrastet sind und diese Verrastung mittels des Sicherungsrings gesichert ist, und wobei der Sicherungsring mit dem Sicherungselement in der Sicherungslage die Rotorrastvorrichtung derart hintergreift, dass die Verrastung von Rotor und Gehäuse gesichert ist. Hierdurch ist die Verbindung zwischen dem Rotor auf der einen Seite und dem Gehäuse auf der anderen Seite auf konstruktiv einfache und robuste Weise realisiert.

Eine besonders vorteilhafte Weiterbildung des erfindungsgemäßen Drehwinkelsensors sieht vor, dass der Sicherungsring und die Rotorrastvorrichtung zueinander korrespondierende Drehmomentübertragungsmittel aufweisen, wobei die Drehmomentübertragungsmittel derart ausgebildet sind, dass ein Drehmoment um die Drehachse mittels der Drehmomentübertragungsmittel übertragbar ist. Auf dies Weise ist die Drehmomentübertragung zwischen der Rotorrastvorrichtung und dem Sicherungsring, also innerhalb der Rotorbaugruppe des Rotors, sicher gewährleistet. Darüber hinaus sind dadurch die Rastelemente zur Verbindung der Rotorrastvorrichtung und dem Sicherungsring hinsichtlich deren mechanischer Beanspruchung wirksam entlastet.

Grundsätzlich ist es denkbar, dass die Rotorrastvorrichtung und/oder der Sicherungsring als ein separates Bauteil ausgebildet sind/ist. Eine vorteilhafte Weiterbildung des erfindungsgemäßen Drehwinkelsensors sieht vor, dass die Rotorrastvorrichtung und/oder der Sicherungsring mit dem Rotor einstückig ausgebildet sind/ist. Hierdurch ist die Anzahl der Bauteile verringert und damit die Lagerhaltung und Logistik vereinfacht. Beispielsweise ist es denkbar, dass die Rotorrastvorrichtung und/oder der Sicherungsring aus Kunststoff und ein Rotor aus Metall in einem Kunststoffspritzgussprozess miteinander zu einem Stück verbunden werden. Der Rotor selbst kann dabei einteilig oder mehrteilig ausgebildet sein.

Eine vorteilhafte Weiterbildung der vorgenannten Ausführungsform des erfindungsgemäßen Drehwinkelsensors sieht vor, dass die Rotorrastvorrichtung und/oder der Sicherungsring als ein Kunststoffteil ausgebildet sind/ist, wobei die Rotorrastvorrichtung oder der Sicherungsring den Rotor derart umschließt, dass in der Montagelage des Rotors zum einen der Stator vor einem direkten Kontakt mit dem Rotor geschützt ist und zum anderen eine Sichtkontrolle der Lage des Rotors ermöglicht ist. Auf diese Weise ist ein wirksamer Schutz insbesondere des Stators vor einer ungewünschten Beschädigung durch den Rotor gewährleistet und gleichzeitig ist es möglich, die Lage des Rotors auf einfache Art, beispielsweise mittels einer Kamera, zu kontrollieren. Dies ist wichtig, da beispielsweise bei induktiven Messverfahren die Ausrichtung des Rotors relativ zu dem Stator für eine qualitativ hochwertige Messung mittels des Drehwinkelsensors eine entscheidende Rolle spielt.

Eine weitere vorteilhafte Weiterbildung des erfindungsgemäßen Drehwinkelsensors sieht vor, dass die Rotorrastvorrichtung, der Sicherungsring und das Gehäuse derart aufeinander abgestimmt ausgebildet sind, dass die Verbindung des Rotors mit dem Gehäuse in der Montagelage des Rotors mittels einer Sichtkontrolle überprüfbar ist. Für die Funktion des erfindungsgemäßen Drehwinkelsensors auch unter widrigen Umgebungsbedingungen, beispielsweise Vibrationen, Temperaturwechseln oder dergleichen, ist eine ordnungsgemäße Verbindung zwischen dem Rotor und dem Gehäuse erforderlich. Mittels des Drehwinkelsensors gemäß dieser Weiterbildung kann das Vorliegen einer ordnungsgemäßen Verbindung zwischen dem Rotor und dem Gehäuse auf einfache Weise, beispielsweise mittels einer Kamera, kontrolliert werden.

Eine besonders vorteilhafte Weiterbildung des erfindungsgemäßen Drehwinkelsensors sieht vor, dass die Rotorrastvorrichtung und/oder der Sicherungsring derart ausgebildet sind/ist, dass die Rotorrastvorrichtung und/oder der Sicherungsring in einem Spritzgussprozess ohne den Einsatz von Schiebern herstellbar sind/ist. Hierdurch ist der erfindungsgemäße Drehwinkelsensor auf besonders einfache Weise und kostengünstig realisierbar.

Eine andere vorteilhafte Weiterbildung des erfindungsgemäßen Drehwinkelsensors sieht vor, dass die Rotorrastvorrichtung und der Sicherungsring zueinander korrespondierende Justiermittel zur automatischen Ausrichtung des Sicherungsrings relativ zu der Rotorrastvorrichtung bei dessen Überführung in dessen Sicherungslage aufweisen. Auf diese Weise ist die Ausrichtung des Sicherungsrings relativ zu der Rotorrastvorrichtung vereinfacht und damit eine ordnungsgemäße Verbindung zwischen dem Sicherungsring auf der einen Seite und der Rotorrastvorrichtung auf der anderen Seite bei der Überführung des Sicherungsrings in dessen Sicherungslage gewährleistet.

Eine weitere vorteilhafte Weiterbildung des erfindungsgemäßen Drehwinkelsensors sieht vor, dass die Rotorrastvorrichtung und/oder der Sicherungsring mit einem Schmiermittel gefüllte Schmiermitteldepots aufweisen/aufweist, die derart angeordnet sind, dass eine Bewegung des Rotors relativ zu dem Gehäuse befördert ist. Hierdurch ist eine verschleißarme und damit auch geräuscharme Drehung des Rotors um die Drehachse ermöglicht.

Ferner sieht eine weitere vorteilhafte Weiterbildung des erfindungsgemäßen Drehwinkelsensors vor, dass die Rastelemente des Sicherungsrings als Rasthaken, die Rastelemente der Rotorrastvorrichtung als Rastöffnungen und die axialen Lagesicherungselemente der Rotorbaugruppe als an der Rotorrastvorrichtung und an dem Sicherungsring angeordnete Vorsprünge und/oder Absätze ausgebildet sind. Auf diese Weise ist zum einen eine robuste und konstruktiv einfache Verbindung des Sicherungsrings mit der Rotorrastvorrichtung und gleichzeitig eine sehr kompakte Anordnung der axialen Lagesicherungselemente realisierbar.

Eine dazu alternative vorteilhafte Weiterbildung des erfindungsgemäßen Drehwinkelsensors sieht vor, dass die Rastelemente des Sicherungsrings als Einpresselemente, die Rastelemente der Rotorrastvorrichtung als Einpressöffnungen und die axialen Lagesicherungselemente der Rotorbaugruppe als an der Rotorrastvorrichtung und an dem Sicherungsring angeordnete Vorsprünge und/oder Absätze ausgebildet sind. Hierdurch ist eine sehr platzsparende Ausführungsform der Rotorbaugruppe und damit des Drehwinkelsensors ermöglicht.

Eine weitere vorteilhafte Weiterbildung des erfindungsgemäßen Drehwinkelsensors sieht vor, dass der Sicherungsring als ein Drehwinkelbestimmungselement zur Bestimmung des Drehwinkels, bevorzugt als ein Initialzahnrad, ausgebildet ist. Auf diese Weise ist die Funktionalität des Sicherungsrings weiter erhöht. Ferner ist dadurch die Anzahl der Bauteile und der erforderliche Platzbedarf weiter reduziert.

Anhand der beigefügten, grob schematischen Zeichnung wird die Erfindung nachfolgend näher erläutert. Dabei zeigt:
- Fig. 1: ein erstes Ausführungsbeispiel des erfindungsgemäßen Drehwinkelsensors in einer Explosionsdarstellung,
- Fig. 2: das erste Ausführungsbeispiel in einer teilweisen perspektivischen Darstellung mit Blick auf die Rotorrastvorrichtung,
- Fig. 3: das erste Ausführungsbeispiel in einer teilweisen perspektivischen Darstellung mit Blick auf den Sicherungsring und die Rotorrastvorrichtung, in einer Nichtsicherungslage des Sicherungsrings,
- Fig. 4: das erste Ausführungsbeispiel in einer Draufsicht, in der Montagelage des Rotors,
- Fig. 5: den Schnitt B-B in der Fig. 4,
- Fig. 6: das Detail C in der Fig. 5,
- Fig. 7: den Schnitt A-A in der Fig. 4,
- Fig. 8: das Detail D in der Fig. 7,
- Fig. 9: das erste Ausführungsbeispiel in einer Unteransicht, in der Montagelage des Rotors,
- Fig. 10: das Detail I in der Fig. 9,
- Fig. 11: das erste Ausführungsbeispiel in einer teilweise geschnittenen perspektivischen Ansicht, in der Montagelage des Rotors,
- Fig. 12: das Detail H in der Fig. 11,
- Fig. 13: das erste Ausführungsbeispiel in einer Unteransicht, in der Montagelage des Rotors und ohne das Gehäuse,
- Fig. 14: das erste Ausführungsbeispiel in einer Seitenansicht, in der Montagelage des Rotors und ohne das Gehäuse,
- Fig. 15: das erste Ausführungsbeispiel in einer Draufsicht, in der Montagelage des Rotors und ohne das Gehäuse,
- Fig. 16: den Schnitt F-F in der Fig. 15,
- Fig. 17: den Schnitt G-G in der Fig. 15,
- Fig. 18: den Schnitt E-E in der Fig. 15,
- Fig. 19 a bis c: ein zweites Ausführungsbeispiel des erfindungsgemäßen Drehwinkelsensors in grob vereinfachten und teilweisen Darstellungen,
- Fig. 20 a bis c: ein drittes Ausführungsbeispiel des erfindungsgemäßen Drehwinkelsensors in grob vereinfachten und teilweisen Darstellungen und
- Fig. 21 a bis c: ein viertes Ausführungsbeispiel des erfindungsgemäßen Drehwinkelsensors in grob vereinfachten und teilweisen Darstellungen.

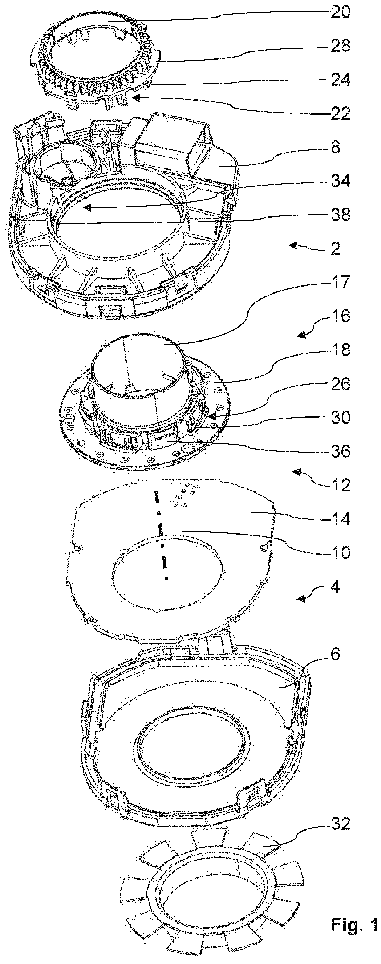

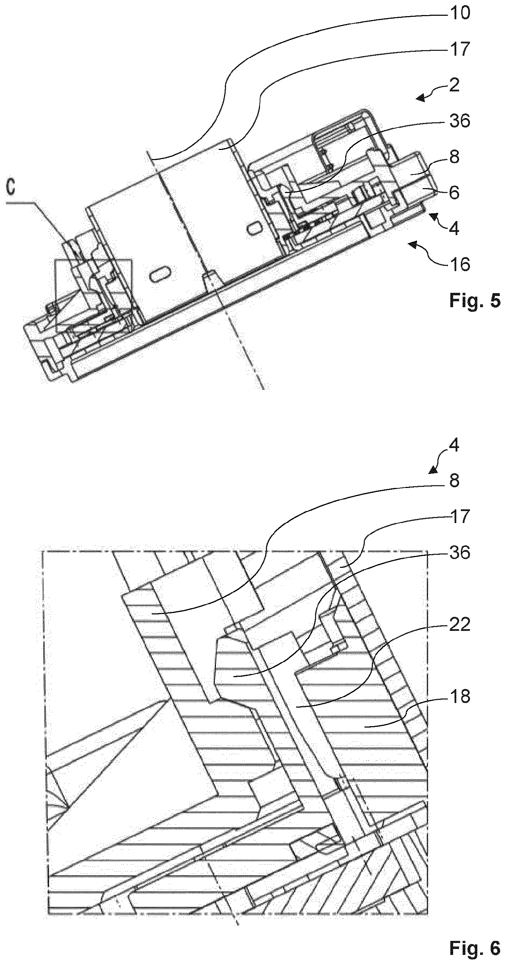

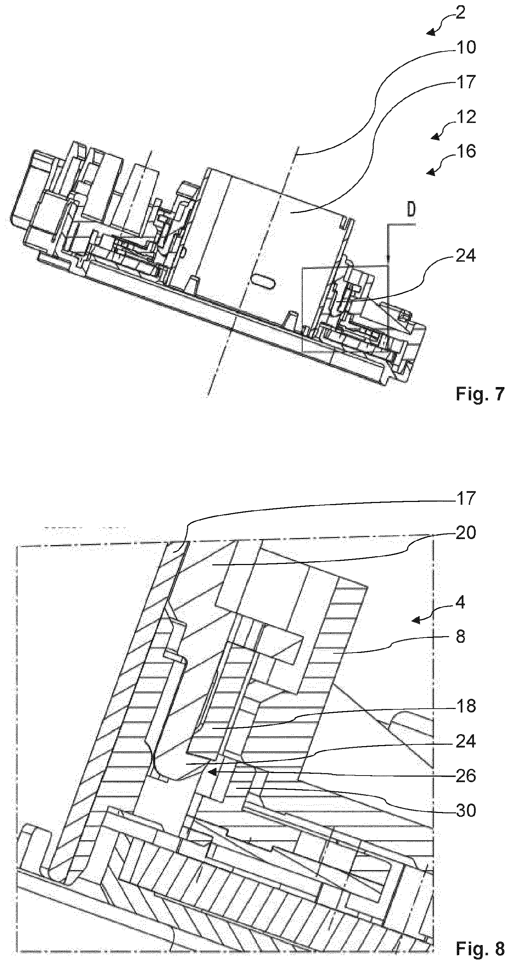

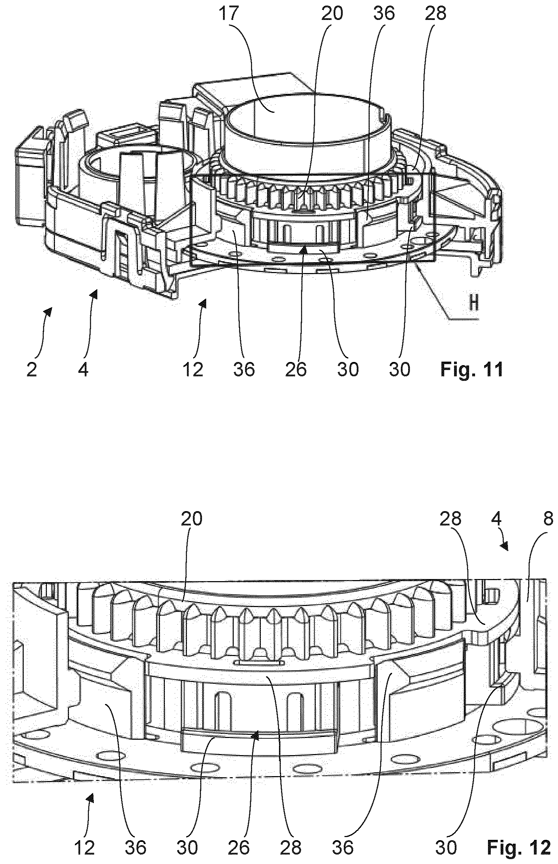

Ein erstes Ausführungsbeispiel des erfindungsgemäßen Drehwinkelsensors ist in den Fig. 1 bis 18 dargestellt und wird nachfolgend näher erläutert.

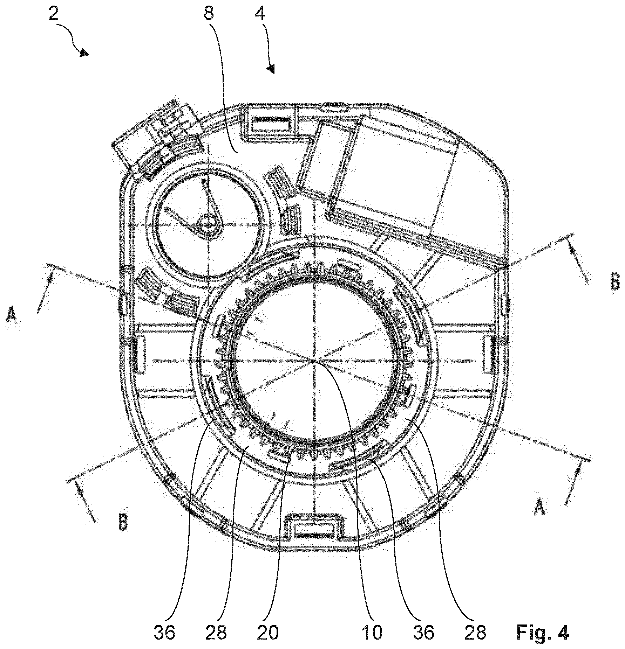

Der Drehwinkelsensor 2 ist hier ein induktiver Lenkwinkelsensor und zur Bestimmung eines Drehwinkels und eines Drehmoments ausgebildet und in der Fig. 1 in einer Explosionsdarstellung dargestellt. Der Drehwinkelsensor 2 umfasst ein Gehäuse 4 mit einem Gehäuseunterteil 6 und einem Gehäuseoberteil 8, einen an dem Gehäuse 4 um eine Drehachse 10 drehbar angeordneten Rotor 12 und eine Leiterplatte 14 mit mindestens einem zu dem Rotor 12 korrespondierenden, nicht dargestellten Stator, wobei der Rotor 12 eine Rotorbaugruppe 16 mit einer Rotorrastvorrichtung 18 aufweist, und wobei der Rotor 12 und das Gehäuse 4 mittels der Rotorrastvorrichtung 18 in einer in den Fig. 4 bis 12 dargestellten Montagelage des Rotors 12 miteinander verbunden sind und diese Verbindung mittels eines Sicherungsrings 20 gesichert ist, wobei der Sicherungsring 20 dazu in axialer Richtung entlang der Drehachse 10 in eine in den Fig. 4 bis 18 dargestellten Sicherungslage überführbar ist.

Der Sicherungsring 20 ist ein integraler Bestandteil der Rotorbaugruppe 16 und weist bei dem vorliegenden Ausführungsbeispiel insgesamt vier Sicherungselemente 22 auf, mit denen der Sicherungsring 20 in dessen Sicherungslage die Verbindung von Rotor 12 und Gehäuse 4 sichert, wobei der Sicherungsring 20 und die Rotorrastvorrichtung 18 jeweils zueinander korrespondierende Rastelemente 24, 26 und die Rotorbaugruppe 16 axiale Lagesicherungselemente 28, 30 aufweisen, und wobei die Rastelemente 24, 26 in der Sicherungslage des Sicherungsrings 20 derart zusammenwirken, dass der Sicherungsring 20 in axialer Richtung entlang der Drehachse 10 relativ zu dem Rotor 12 festgelegt ist, und wobei die axialen Lagesicherungselemente 28, 30 in der Sicherungslage des Sicherungsrings 20 derart zusammenwirken, dass der Rotor 12 in axialer Richtung entlang der Drehachse 10 an dem Gehäuse 4 im Wesentlichen spielfrei festgelegt ist. Bei dem vorliegenden Ausführungsbeispiel weisen die Rotorrastvorrichtung 18 und der Sicherungsring 20 jeweils insgesamt vier Rastelemente 24, 26 und jeweils insgesamt vier axiale Lagesicherungselemente 28, 30 auf. Die Rastelemente 24 des Sicherungsrings 20 sind als Rasthaken, die Rastelemente 26 der Rotorrastvorrichtung 18 sind als Rastöffnungen und die axialen Lagesicherungselemente 28, 30 der Rotorbaugruppe 16 sind als an der Rotorrastvorrichtung 18 ausgebildete Absätze 30 und als an dem Sicherungsring 20 angeordnete Vorsprünge 28 ausgebildet.

Ferner weist der Drehwinkelsensor 2 einen zusätzlichen Rotor 32 auf, der auf dem Fachmann bekannte Weise ausgebildet und an dem Rest des Drehwinkelsensors 2 angeordnet ist. Die beiden Rotoren 12, 32 sind erforderlich, um neben dem Drehwinkel auch das Drehmoment einer nicht dargestellten Lenkwelle eines ebenfalls nicht dargestellten Kraftfahrzeugs zu bestimmen, an der der Drehwinkelsensor 2 angeordnet ist. Darüber hinaus ist der Sicherungsring 20 gleichzeitig als ein Drehwinkelbestimmungselement zur Bestimmung des Drehwinkels, nämlich als ein Initialzahnrad, ausgebildet. Auf diese Weise ist es möglich, eine Zählfunktion zu realisieren, mittels der beispielsweise auch Mehrfachumdrehungen der Lenkwelle bestimmbar sind.

Zur Verbindung des Rotors 12 mit dem Gehäuse 4 weist das Gehäuse 4 eine zu der Rotorrastvorrichtung 18 des Rotors 12 korrespondierende Gehäuserastvorrichtung 34 auf, wobei der Rotor 12 und das Gehäuse 4 mittels der Rotorrastvorrichtung 18 und der Gehäuserastvorrichtung 34 in der Montagelage des Rotors 12 miteinander verrastet sind. Die Rotorrastvorrichtung 18 weist hierfür insgesamt vier Rasthaken 36 auf, die mit einem Rastabsatz 38 der Gehäuserastvorrichtung 34 in der Montagelage des Rotors 12 in Eingriff sind. Diese Verrastung ist mittels des Sicherungsrings 20 gesichert, wobei der Sicherungsring 20 mit den Sicherungselementen 22 in der Sicherungslage die Rotorrastvorrichtung 18 derart hintergreift, dass die Verrastung von Rotor 12 und Gehäuse 4 gesichert ist.

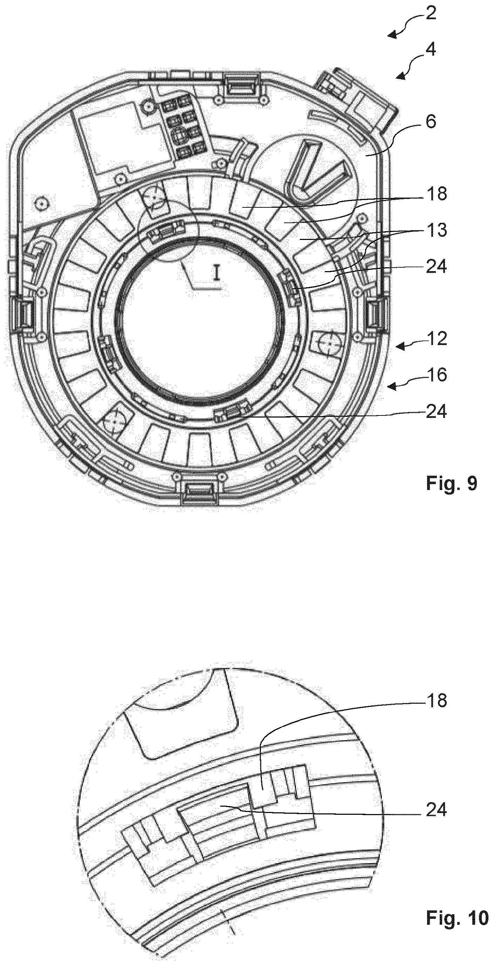

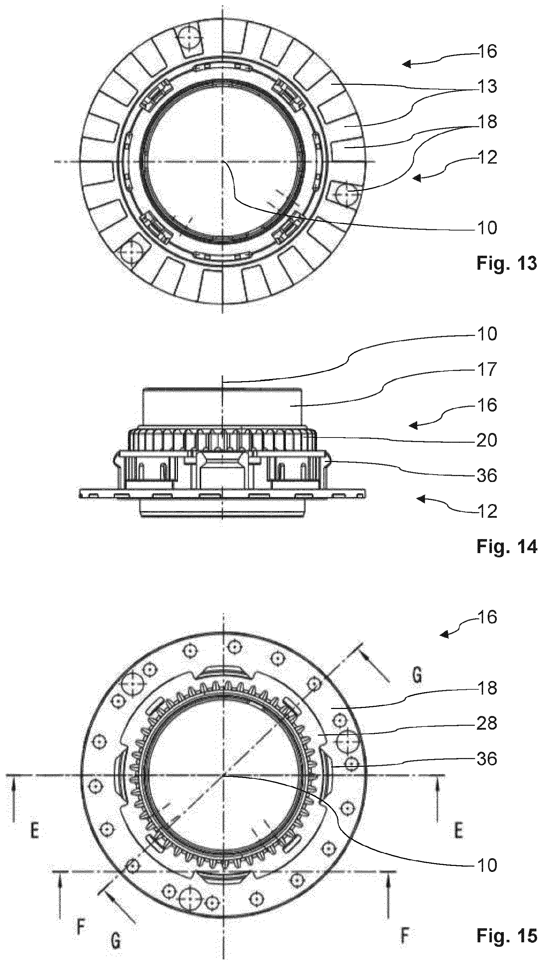

Ferner sind die Sicherungsmittel 22 des Sicherungsrings 20 und nicht näher dargestellte Konturen der Rotorrastvorrichtung 18 als zueinander korrespondierende Drehmomentübertragungsmittel ausgebildet, wobei die Drehmomentübertragungsmittel derart ausgebildet sind, dass ein Drehmoment um die Drehachse 10 mittels der Drehmomentübertragungsmittel übertragbar ist. Die Rotorrastvorrichtung 18 ist mit dem Rotor 12 einstückig ausgebildet, wobei die Rotorrastvorrichtung 18 als ein Kunststoffteil ausgebildet ist und den Rotor 12 derart umschließt, dass in der Montagelage des Rotors 12 zum einen der Stator vor einem direkten Kontakt mit dem Rotor 12 geschützt ist und zum anderen eine Sichtkontrolle der Lage des Rotors 12 ermöglicht ist. Siehe hierzu insbesondere die Fig. 9 und 13 aus denen der mit der Rotorrastvorrichtung 18 umspritzte Rotor 12 aus Metall ersichtlich ist. Der Rotor 12 weist Rotorflügel 13 auf und ist auf dessen dem Stator auf der Leiterplatte 14 zugewandten Seite nicht vollständig von der Rotorrastvorrichtung 18 aus Kunststoff umgeben. Allerdings springt die Rotorrastvorrichtung 18 aus Kunststoff an den Seiten des Rotors 12, nämlich an den Seiten jeder der Rotorflügel 13 des Rotors 12, in Richtung der Leiterplatte 14 über den Rotor 12, nämlich dessen Rotorflügel 13, hervor, so dass ein direkter Kontakt des Rotors 12 mit dem Stator wirksam verhindert ist. Gleichzeitig ist eine ordnungsgemäße Lage des Rotors 12 mittels einer Kamera oder dergleichen auf einfache Weise überprüfbar, was bei einem vollständigen Umschließen des Rotors 12, insbesondere von dessen Rotorflügeln 13, mit der Rotorrastvorrichtung 18 aus Kunststoff nicht möglich wäre. Die Rotorflügel 13 des Rotors 12 sind an einem rohrartigen Teil 17 des Rotors 12 angeordnet und beispielsweise als ein Biege-Stanz-Teil aus einem Blech ausgebildet.

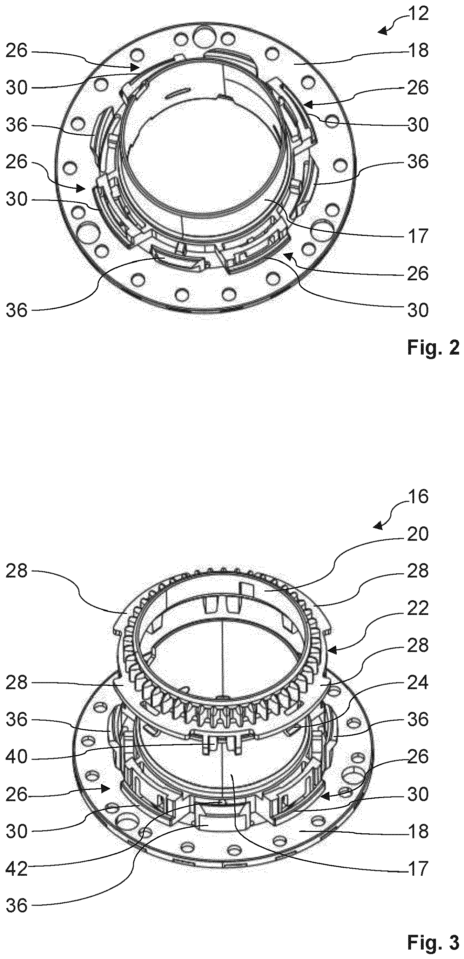

Die Rotorrastvorrichtung 18 aus Kunststoff ist beispielsweise als ein Kunststoffspritzgussteil ausgebildet sein, dass an den Rotor 12 angespritzt ist. Dabei ist die Rotorrastvorrichtung 18 bei dem vorliegenden Ausführungsbeispiel derart ausgebildet, dass die Rotorrastvorrichtung 18 in einem Spritzgussprozess ohne den Einsatz von Schiebern herstellbar ist. Siehe hierzu insbesondere die Fig. 2 aus der hervorgeht, dass die vorgenannte Fertigung der Rotorrastvorrichtung 18 möglich ist. Beispielsweise kann hierfür ein dreiteiliges Spritzgusswerkzeug verwendet werden, bei dem ein Teil die aus der Fig. 2 ersichtlichen Rastöffnungen 26 und hinter den Rasthaken 36 angeordneten Öffnungen in der Rotorrastvorrichtung 18 während des Spritzgussprozesses ausbildet. Dieser Teil kann dann als erstes ausgefahren werden, so dass die Rasthaken 36 in den dadurch gebildeten Freiraum bei der Entnahme des Rotors 12 mit der daran angespritzten Rotorrastvorrichtung 18 ausfedern können.

In analoger Weise ist es bei dem vorliegenden Ausführungsbeispiel auch möglich, die Verbindung des Rotors 12 mit dem Gehäuse 4 in der Montagelage des Rotors 12 mittels einer Sichtkontrolle, beispielsweise mittels einer Kamera oder dergleichen, zu überprüfen. Hierfür sind die Rotorrastvorrichtung 18, der Sicherungsring 10 und das Gehäuse 4 aufeinander abgestimmt ausgebildet. Siehe hierzu insbesondere die Fig. 9 und 10, aus denen hervorgeht, dass die oben genannte Sichtkontrolle der ordnungsgemäßen Verbindung des Rotors 12 mit dem Gehäuse 4, nämlich der ordnungsgemäßen Verrastung der Rasthaken 36 der Rotorrastvorrichtung 18 mit dem Rastabsatz 38 der Gehäuserastvorrichtung 34, bei dem vorliegenden Ausführungsbeispiel ermöglicht ist.

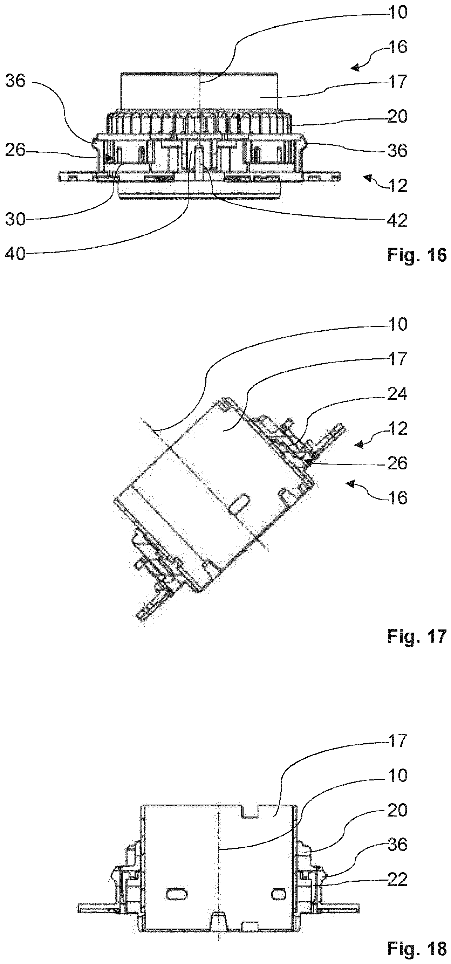

Um eine ordnungsgemäße Ausrichtung des Sicherungsrings 20 relativ zu der Rotorrastvorrichtung 18 und damit zu dem Rotor 12 bei der Überführung des Sicherungsrings 20 in dessen Sicherungslage zu gewährleisten, weisen die Rotorrastvorrichtung 18 und der Sicherungsring 20 zueinander korrespondierende Justiermittel 40, 42 zur automatischen Ausrichtung des Sicherungsrings 20 relativ zu der Rotorrastvorrichtung 18 bei dessen Überführung in dessen Sicherungslage auf. Hierfür weist der Sicherungsring 20 insgesamt vier gabelförmige Justiermittel 40 und die Rotorrastvorrichtung insgesamt vier stegförmige Justiermittel 42 auf. Siehe hierzu insbesondere die Fig. 3 und 16.

Im Nachfolgenden wird der Zusammenbau des erfindungsgemäßen Drehwinkelsensors gemäß dem vorliegenden Ausführungsbeispiel und anhand der Fig. 1 bis 18 näher erläutert.

Zunächst liegt der Drehwinkelsensor 2 in einer Nichtmontagelage des Rotors 12 vor, wie dies aus Fig. 1 ersichtlich ist. Die einzelnen Teile des Drehwinkelsensors 2 werden dann in der Reihenfolge wie in der Fig. 1 dargestellt miteinander verbunden. Dabei wird der Rotor 2 mit der daran angespritzten Rotorrastvorrichtung 18 mit dem Gehäuse 4 verbunden. Hierfür werden die Rasthaken 36 der Rotorrastvorrichtung 18 mit dem Rastabsatz 38 der Gehäuserastvorrichtung 34 des Gehäuses 4 in Eingriff gebracht, nämlich miteinander verrastet. Danach wird der Sicherungsring 20 mit der Rotorrastvorrichtung 18 verbunden. Dabei wird der Sicherungsring 20 in dessen Sicherungslage überführt, wobei die Rasthaken 24 des Sicherungsrings 20 mit den Rastöffnungen 26 der Rotorrastvorrichtung 18 in Eingriff gelangen und mit der Rotorrastvorrichtung 18 verrasten. In der Sicherungslage des Sicherungsrings 20 hintergreifen die Sicherungselemente 22 des Sicherungsrings 20 die Rasthaken 36 der Rotorrastvorrichtung 18, so dass die Rasthaken 36 in deren Lage gesichert sind und damit auch die oben genannte Verrastung des Rotors 12 mit dem Gehäuse 4 gesichert ist. Gleichzeitig gewährleisten die axialen Lagesicherungselemente 28, 30 des Sicherungsrings 20 und der Rotorrastvorrichtung 18, dass der Rotor 12 in axialer Richtung entlang der Drehachse 10 an dem Gehäuse 4 im Wesentlichen spielfrei festgelegt ist.

Ein wesentlicher Vorteil des erfindungsgemäßen Drehwinkelsensors gemäß dem vorliegenden Ausführungsbeispiel liegt insbesondere darin, dass der Drehwinkelsensor 2 auf einfache und kostengünstige Weise herstellbar ist, da ein Fügen eines als separater Federring ausgebildeten Sicherungsrings wie auch ein Verschweißen eines als Haltering ausgebildeten Sicherungsrings entfällt. Ferner gewährleistet das mindestens eine Sicherungselement 22 des Sicherungsrings 20 in Kombination mit den axialen Lagesicherungselementen 28, 30 der Rotorbaugruppe 16 zum einen eine sichere Verbindung des Rotors 12 mit dem Gehäuse 4 und zum anderen eine im Wesentlichen spielfreie axiale Festlegung des Rotors 12 an dem Gehäuse 4.

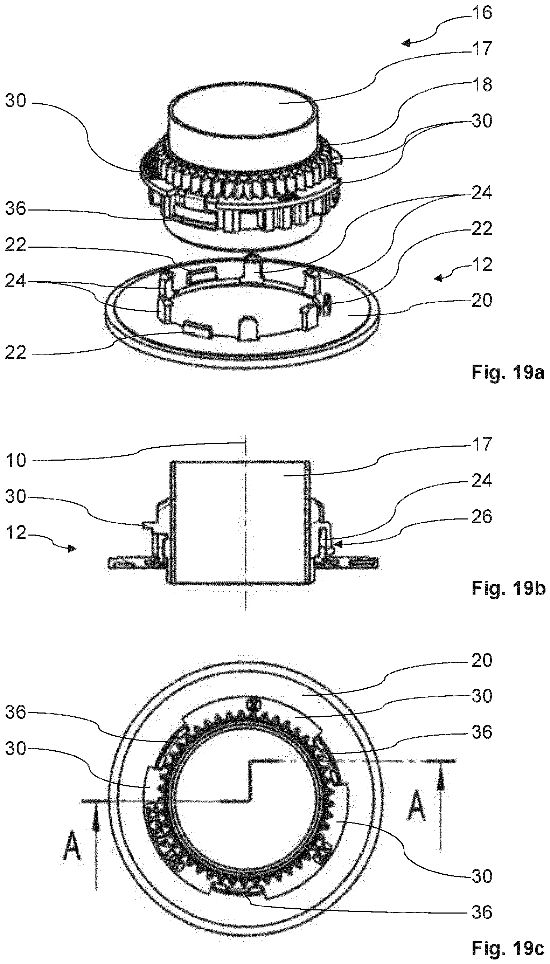

In den Fig. 19a-c, 20a-c und 21a-c ist jeweils ein weiteres Ausführungsbeispiel des erfindungsgemäßen Drehwinkelsensors dargestellt. Diese weiteren Ausführungsbeispiele werden im Nachfolgenden lediglich in dem Umfang erläutert, in dem diese von den jeweils vorgenannten Ausführungsbeispielen abweichen. Ansonsten wird auf die Ausführungen zu den vorhergehenden Ausführungsbeispielen verwiesen. Gleiche oder gleichwirkende Bauteile sind mit den gleichen Bezugszeichen versehen.

Die Fig. 19a bis 19c zeigen ein zweites Ausführungsbeispiel des erfindungsgemäßen Drehwinkelsensors. In der Fig. 19a ist eine perspektivische Ansicht, in der Fig. 19b ist ein Seitenschnitt entlang der Schnittlinie A-A in der Fig. 19c und in der Fig. 19c ist eine Draufsicht dargestellt. Der Drehwinkelsensor 2 gemäß diesem Ausführungsbeispiel unterscheidet sich von dem Drehwinkelsensor 2 gemäß dem ersten Ausführungsbeispiel dadurch, dass die Rotorflügel des Rotors 12 nicht von der Rotorrastvorrichtung 18, sondern von dem Sicherungsring 20 der Rotorbaugruppe 16, beispielsweise auf die oben erläuterte Weise, teilweise umschlossen ist. Die Rotorrastvorrichtung 18 ist darüber hinaus fest mit dem rohrartigen Teil 17 des Rotors 12 verbunden. Beispielsweise ist die Rotorrastvorrichtung 18 aus Kunststoff analog zu oben an das rohrartige Teil 17 des Rotors 12 angespritzt. Die Rasthaken 24 des Sicherungsrings 20 weisen in Richtung der Drehachse 10, was die Herstellung des Sicherungsrings 20, beispielsweise als ein Kunststoffspritzgussteil, vereinfacht. Im Unterschied zu dem ersten Ausführungsbeispiel sind die Rasthaken 36 der Rotorrastvorrichtung 18, anstelle der axialen Lagesicherungselemente 30 gemäß dem ersten Ausführungsbeispiel, gleichzeitig als axiale Lagesicherungselemente der Rotorrastvorrichtung 18 ausgebildet. Diese axialen Lagesicherungselemente 36 wirken auf die oben bereits erläuterte Weise zusammen mit den dazu korrespondierenden axialen Lagesicherungselementen 30 der Rotorrastvorrichtung 18. Anders als bei dem ersten Ausführungsbeispiel sind hier also beide axialen Lagesicherungselemente 36, 30 an der Rotorrastvorrichtung 18 angeordnet.

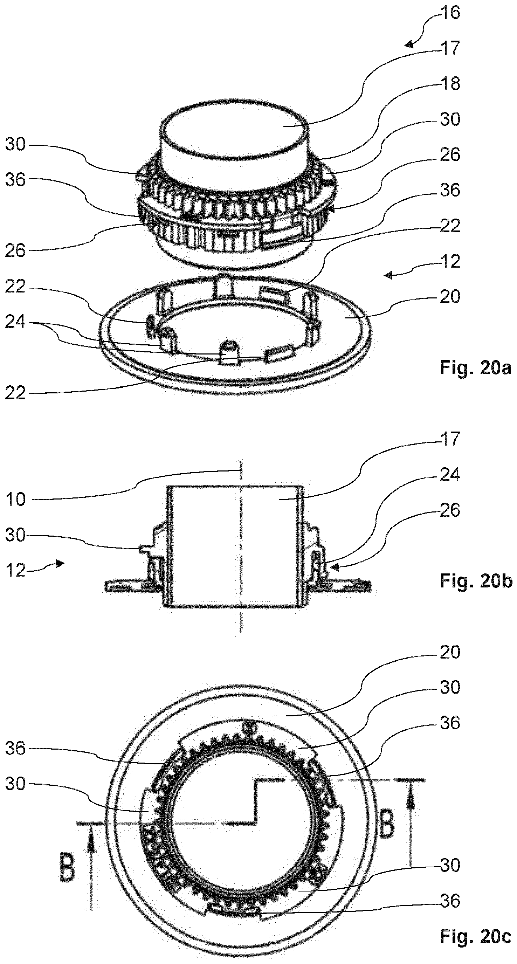

In den Fig. 20a bis 20c ist ein drittes Ausführungsbeispiel des erfindungsgemäßen Drehwinkelsensors dargestellt. In der Fig. 20a ist eine perspektivische Ansicht, in der Fig. 20b ist ein Seitenschnitt entlang der Schnittlinie B-B in der Fig. 20c und in der Fig. 20c ist eine Draufsicht dargestellt. Das dritte Ausführungsbeispiel entspricht im Wesentlichen dem zweiten Ausführungsbeispiel, so dass weitgehend auf die obigen Ausführungen zu dem zweiten Ausführungsbeispiel verwiesen werden kann. Im Unterschied zu dem zweiten Ausführungsbeispiel weisen die Rasthaken 24 des Sicherungsrings 20 des Drehwinkelsensors 2 gemäß dem dritten Ausführungsbeispiel von der Drehachse 10 weg.

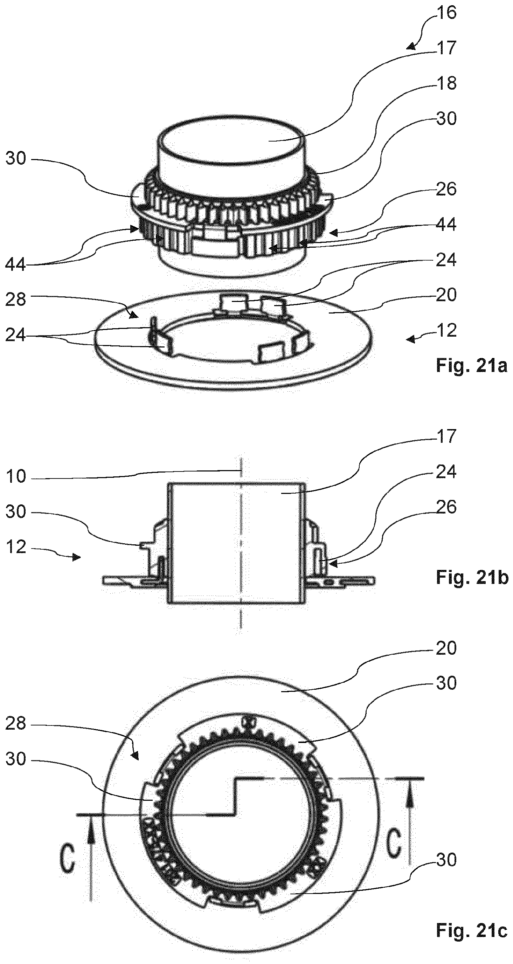

Die Fig. 21a bis 21c zeigen ein viertes Ausführungsbeispiel des erfindungsgemäßen Drehwinkelsensors. In der Fig. 21a ist eine perspektivische Ansicht, in der Fig. 21b ist ein Seitenschnitt entlang der Schnittlinie C-C in der Fig. 21c und in der Fig. 21c ist eine Draufsicht dargestellt. Der Drehwinkelsensor 2 gemäß dem vierten Ausführungsbeispiel unterscheidet sich von den vorgenannten Ausführungsbeispielen insbesondere darin, dass die Rastelemente 24 des Sicherungsrings 20 als Einpresselemente und die Rastelemente 26 der Rotorrastvorrichtung 18 als Einpressöffnungen ausgebildet sind. Im Unterschied zu den vorhergehenden Ausführungsbeispielen ist eine in den Fig. 21a und 21c sichtbare Fläche des Sicherungsrings 20, anstelle der axialen Lagesicherungselemente 28 gemäß dem ersten Ausführungsbeispiel, gleichzeitig als axiales Lagesicherungselement 28 ausgebildet. Dieses axiale Lagesicherungselement 28 wirkt auf die oben bereits erläuterte Weise zusammen mit den dazu korrespondierenden axialen Lagesicherungselementen 30 der Rotorrastvorrichtung 18. Ferner weist die Rotorrastvorrichtung 18 mit einem nicht dargestellten Schmiermittel gefüllte Schmiermitteldepots 44 auf, die derart angeordnet sind, dass eine Bewegung des Rotors 12 relativ zu dem Gehäuse 4 befördert ist.

Die Erfindung, welche allein durch die Ansprüche definiert ist, ist nicht auf die vorliegenden Ausführungsbeispiele begrenzt. Beispielsweise ist es denkbar, dass die erläuterten Ausführungsbeispiele in Teilen miteinander kombiniert werden. Ferner ist der erfindungsgemäße Drehwinkelsensor für eine Vielzahl von voneinander verschiedenen Anwendungsfällen vorteilhaft einsetzbar. Darüber hinaus ist es vorstellbar, dass der Sicherungsring und die Rotorrastvorrichtung zueinander korrespondierende Drehmomentübertragungsmittel aufweisen, die separat von anderen Elementen des Sicherungsrings oder der Rotorrastvorrichtung, beispielsweise separat von Rastelementen, wie Rasthaken oder dergleichen, ausgebildet sind.

### Bezugszeichenliste

- 2: Drehwinkelsensor
- 4: Gehäuse
- 6: Gehäuseunterteil
- 8: Gehäuseoberteil
- 10: Drehachse
- 12: Rotor
- 13: Rotorflügel des Rotors 12
- 14: Leiterplatte
- 16: Rotorbaugruppe
- 17: Rohrartiges Teil des Rotors 12
- 18: Rotorrastvorrichtung
- 20: Sicherungsring
- 22: Sicherungselemente
- 24: Rastelemente des Sicherungsrings 20
- 26: Rastelemente der Rotorrastvorrichtung 18
- 28: Axiale Lagesicherungselemente des Sicherungsrings 20
- 30: Axiale Lagesicherungselemente der Rotorrastvorrichtung 18
- 32: Zusätzlicher Rotor
- 34: Gehäuserastvorrichtung
- 36: Rasthaken der Rotorrastvorrichtung 18
- 38: Rastabsatz der Gehäuserastvorrichtung 34
- 40: Gabelförmige Justiermittel des Sicherungsrings 20
- 42: Stegförmige Justiermittel der Rotorrastvorrichtung 18
- 44: Schmiermitteldepots der Rotorrastvorrichtung 18

## Patentansprüche

1. Drehwinkelsensor (2) zur Bestimmung eines Drehwinkels und/oder eines Drehmoments, umfassend ein Gehäuse (4), einen an dem Gehäuse (4) um eine Drehachse (10) drehbar angeordneten Rotor (12) und eine Leiterplatte (14) mit mindestens einem zu dem Rotor (12) korrespondierenden Stator, wobei der Rotor (12) eine Rotorbaugruppe (16) mit einer Rotorrastvorrichtung (18) aufweist, und wobei der Rotor (12) und das Gehäuse (4) mittels der Rotorrastvorrichtung (18) in einer Montagelage des Rotors (12) miteinander verbunden sind und diese Verbindung mittels eines Sicherungsrings (20) gesichert ist, wobei der Sicherungsring (20) dazu in axialer Richtung entlang der Drehachse (10) in eine Sicherungslage überführbar ist,
**dadurch gekennzeichnet,**
**dass** der Sicherungsring (20) integraler Bestandteil der Rotorbaugruppe (16) ist und mindestens ein Sicherungselement (22) aufweist, mit dem der Sicherungsring (20) in dessen Sicherungslage die Verbindung von Rotor (12) und Gehäuse (4) sichert, und wobei der Sicherungsring (20) und die Rotorrastvorrichtung (18) jeweils zueinander korrespondierende Rastelemente (24, 26) und die Rotorbaugruppe (16) axiale Lagesicherungselemente (28, 30) aufweisen, und wobei die Rastelemente (24, 26) in der Sicherungslage des Sicherungsrings (20) derart zusammenwirken, dass der Sicherungsring (20) in axialer Richtung entlang der Drehachse (10) relativ zu dem Rotor (12) festgelegt ist, und wobei die axialen Lagesicherungselemente (28, 30) in der Sicherungslage des Sicherungsrings (20) derart zusammenwirken, dass der Rotor (12) in axialer Richtung entlang der Drehachse (10) an dem Gehäuse (4) im Wesentlichen spielfrei festgelegt ist.

2. Drehwinkelsensor (2) nach Anspruch 1,
**dadurch gekennzeichnet,**
**dass** das Gehäuse (4) eine zu der Rotorrastvorrichtung (18) des Rotors (12) korrespondierende Gehäuserastvorrichtung (34) aufweist, wobei der Rotor (12) und das Gehäuse (4) mittels der Rotorrastvorrichtung (18) und der Gehäuserastvorrichtung (34) in der Montagelage des Rotors (12) miteinander verrastet sind und diese Verrastung mittels des Sicherungsrings (20) gesichert ist, und wobei der Sicherungsring (20) mit dem Sicherungselement (22) in der Sicherungslage die Rotorrastvorrichtung (18) derart hintergreift, dass die Verrastung von Rotor (12) und Gehäuse (4) gesichert ist.

3. Drehwinkelsensor (2) nach Anspruch 1 oder 2,
**dadurch gekennzeichnet,**
**dass** der Sicherungsring (20) und die Rotorrastvorrichtung (18) zueinander korrespondierende Drehmomentübertragungsmittel aufweisen, wobei die Drehmomentübertragungsmittel derart ausgebildet sind, dass ein Drehmoment um die Drehachse (10) mittels der Drehmomentübertragungsmittel übertragbar ist.

4. Drehwinkelsensor (2) nach einem der Ansprüche 1 bis 3,
**dadurch gekennzeichnet,**
**dass** die Rotorrastvorrichtung (18) und/oder der Sicherungsring (20) mit dem Rotor (12) einstückig ausgebildet sind/ist.

5. Drehwinkelsensor (2) nach Anspruch 4,
**dadurch gekennzeichnet,**
**dass** die Rotorrastvorrichtung (18) und/oder der Sicherungsring (20) als ein Kunststoffteil ausgebildet sind/ist, wobei die Rotorrastvorrichtung (18) oder der Sicherungsring (20) den Rotor (12) derart umschließt, dass in der Montagelage des Rotors (12) zum einen der Stator vor einem direkten Kontakt mit dem Rotor (12) geschützt ist und zum anderen eine Sichtkontrolle der Lage des Rotors (12) ermöglicht ist.

6. Drehwinkelsensor (2) nach einem der Ansprüche 1 bis 5,
**dadurch gekennzeichnet,**
**dass** die Rotorrastvorrichtung (18), der Sicherungsring (20) und das Gehäuse (4) derart aufeinander abgestimmt ausgebildet sind, dass die Verbindung des Rotors (12) mit dem Gehäuse (4) in der Montagelage des Rotors (12) mittels einer Sichtkontrolle überprüfbar ist.

7. Drehwinkelsensor (2) nach einem der Ansprüche 1 bis 6,
**dadurch gekennzeichnet,**
**dass** die Rotorrastvorrichtung (18) und/oder der Sicherungsring (20) derart ausgebildet sind/ist, dass die Rotorrastvorrichtung (18) und/oder der Sicherungsring (20) in einem Spritzgussprozess ohne den Einsatz von Schiebern herstellbar sind/ist.

8. Drehwinkelsensor (2) nach einem der Ansprüche 1 bis 7,
**dadurch gekennzeichnet,**
**dass** die Rotorrastvorrichtung (18) und der Sicherungsring (20) zueinander korrespondierende Justiermittel (40, 42) zur automatischen Ausrichtung des Sicherungsrings (20) relativ zu der Rotorrastvorrichtung (18) bei dessen Überführung in dessen Sicherungslage aufweisen.

9. Drehwinkelsensor (2) nach einem der Ansprüche 1 bis 8,
**dadurch gekennzeichnet,**
**dass** die Rotorrastvorrichtung (18) und/oder der Sicherungsring mit einem Schmiermittel gefüllte Schmiermitteldepots (44) aufweisen/aufweist, die derart angeordnet sind, dass eine Bewegung des Rotors (12) relativ zu dem Gehäuse (4) befördert ist.

10. Drehwinkelsensor (2) nach einem der Ansprüche 1 bis 9,
**dadurch gekennzeichnet,**
**dass** die Rastelemente (24) des Sicherungsrings (20) als Rasthaken, die Rastelemente (26) der Rotorrastvorrichtung (18) als Rastöffnungen und die axialen Lagesicherungselemente (28, 30) der Rotorbaugruppe (16) als an der Rotorrastvorrichtung (18) und an dem Sicherungsring (20) angeordnete Vorsprünge und/oder Absätze ausgebildet sind.

11. Drehwinkelsensor (2) nach einem der Ansprüche 1 bis 9,
**dadurch gekennzeichnet,**
**dass** die Rastelemente (24) des Sicherungsrings (20) als Einpresselemente, die Rastelemente (26) der Rotorrastvorrichtung (18) als Einpressöffnungen und die axialen Lagesicherungselemente (28; 30) der Rotorbaugruppe (16) als an der Rotorrastvorrichtung (18) und an dem Sicherungsring (20) angeordnete Vorsprünge und/oder Absätze ausgebildet sind.

12. Drehwinkelsensor (2) nach einem der Ansprüche 1 bis 11,
**dadurch gekennzeichnet,**
**dass** der Sicherungsring (20) als ein Drehwinkelbestimmungselement zur Bestimmung des Drehwinkels, bevorzugt als ein Initialzahnrad, ausgebildet ist.

## Claims

1. Turning angle sensor (2) for determining a turning angle and/or a torque, comprising a housing (4), a rotor (12) arranged on the housing (4) so as to be rotatable around a rotary axis (10) and a printed circuit board (14) with at least one stator corresponding to the rotor (12), wherein the rotor (12) features a rotor assembly (16) with a rotor latching device (18), and wherein the rotor (12) and the housing (4) are connected to each other in a mounting position of the rotor (12) by means of a rotor latching device (18) and such connection is secured by means of a retaining ring (20), wherein for this purpose the retaining ring (20) can be transposed in an axial direction along the rotary axis (10) into a secured position, **characterised in that** the retaining ring (20) in an integral part of the rotor assembly (16) and features at least one locking element (22) with which the retaining ring (20) secures the connection between rotor (12) and housing (4) in its locking position, and wherein the retaining ring (20) and the rotor latching device (18) each feature latching elements (24, 26) corresponding to each other and the rotor assembly (16) features axial position locking elements (28, 30), and wherein the latching elements (24, 26) interact in the locking position of the retaining ring (20) in such a way that the retaining ring (20) is specified in an axial direction along the rotary axis (10) relative to the rotor (12), and wherein the axial position locking elements (28, 30) interact in the locking position of the retaining ring (20) in such a way that the rotor (12) is specified on the housing (4) in an axial direction along the rotary axis (10) essentially without backlash.

2. Turning angle sensor (2) in accordance
with Claim 1, **characterized in that**
the housing (4) features a housing latching device (34) corresponding to the rotor latching device (18) of the rotor (12), wherein the rotor (12) and the housing (4) lock into each other by means of the rotor latching device (18) and the housing latching device (34) in the mounting position of the rotor (12) and such locking is secured by the retaining ring (20), and wherein the retaining ring (20) with the locking element (22) in the locking position engages the rotor latching device (18) in such a way that the locking of rotor (12) and the housing (4) is secured.

3. Turning angle sensor (2) in accordance with
Claim 1 or 2, **characterized in that**
that the retaining ring (20) and the rotor latching device (18) feature torque transmission means corresponding to each other, wherein the torque transmission means is designed in such a way that a torque around the rotary axis (10) can be transmitted by means of the torque transmission means.

4. Turning angle sensor (2) in accordance with one of Claims 1 through 3, **characterized in that**
the rotor latching device (18) and/or the retaining ring (20) are/is fashioned as one piece with the rotor (12).

5. Turning angle sensor (2) in accordance
with Claim 4, **characterized in that**
the rotor latching device (18) and/or the retaining ring (20) are/is fashioned as a plastic part, wherein the rotor latching device (18) or the retaining ring (20) surround the rotor (12) in such a way that in the mounting position of the rotor (12) firstly the stator is protected from direct contact to the rotor (12) and secondly a visual check of the position of the rotor (12) is made possible.

6. Turning angle sensor (2) in accordance with one of Claims 1 through 5, **characterized in that**
the rotor latching device (18), the retaining ring (20) and the housing (4) are fashioned to be aligned to each other such that the connection of the rotor (12) to the housing (4) can be checked visually in the mounting position of the rotor (12).

7. Turning angle sensor (2) in accordance with one of Claims 1 through 6, **characterized in that**
the rotor latching device (18) and/or the retaining ring (20) are/is fashioned in such a way that the rotor latching device (18) and/or the retaining ring (20) can be manufactured in an injection moulding process without the use of sliders.

8. Turning angle sensor (2) in accordance with one of Claims 1 through 7, **characterized in that**
the rotor latching device (18) and the retaining ring (20) feature means of adjustment (40, 42) corresponding to each other for automatically aligning the retaining ring (20) relative to the rotor latching device (18) when transposing the same into its locking position.

9. Turning angle sensor (2) in accordance with one of Claims 1 through 8, **characterized in that**
the rotor latching device (18) and/or the retaining ring feature/features lubricant reservoirs (44) filled with lubricant that are arranged in such a way that movement of the rotor (12) relative to the housing (4) is promoted.

10. Turning angle sensor (2) in accordance with one of Claims 1 through 9, **characterized in that**
the latching elements (24) of the retaining ring (20) are fashioned as latching hooks, the latching elements (26) of the rotor latching device (18) as latching apertures and the axial position locking elements (28, 30) of the rotor assembly (16) as protrusions and/or shoulders arranged on the rotor latching device (18) and on the retaining ring (20).

11. Turning angle sensor (2) in accordance with one of Claims 1 through 9, **characterized in that**
the latching elements (24) of the retaining ring (20) are fashioned as press-fit elements, the latching elements (26) of the rotor latching device (18) as press-fit apertures and the axial position locking elements (28; 30) of the rotor assembly (16) as protrusions and/or shoulders arranged on the rotor latching device (18) and on the retaining ring (20).

12. Turning angle sensor (2) in accordance with one of Claims 1 through 11, **characterized in that**
the retaining ring (20) is fashioned as a turning angle determining element for determining the turning angle, preferentially as an initial cogwheel.

## Revendications

1. Capteur d'angle de rotation (2) pour déterminer un angle de rotation et/ou un couple, comprenant un boîtier (4), un rotor (12) disposé sur le boîtier (4) de manière à pouvoir tourner autour d'un axe de rotation (10) et une carte de circuit imprimé (14) avec au moins un stator correspondant au rotor (12), dans lequel le rotor (12) comporte un assemblage de rotor (16) avec un dispositif de verrouillage du rotor (18), et dans lequel le rotor (12) et le boîtier (4) sont reliés l'un à l'autre dans une position de montage du rotor (12) au moyen d'un dispositif de verrouillage du rotor (18) et cette liaison est sécurisée au moyen d'un anneau de retenue (20), l'anneau de retenue (20) pouvant être transposé à cette fin dans une direction axiale le long de l'axe de rotation (10) dans une position sécurisée, **caractérisé par le fait que** l'anneau de retenue (20) fait partie intégrante de l'assemblage de rotor (16) et comporte au moins un élément de verrouillage (22) avec lequel l'anneau de retenue (20) sécurise la connexion entre le rotor (12) et le boîtier (4) dans sa position de verrouillage, et dans lequel l'anneau de retenue (20) et le dispositif de verrouillage du rotor (18) comportent chacun des éléments de verrouillage (24, 26) correspondant l'un à l'autre, et l'assemblage de rotor (16) comporte des éléments de verrouillage de la position axiale (28, 30), et dans lequel les éléments de verrouillage (24, 26) interagissent dans la position de verrouillage de l'anneau de retenue (20) de manière à ce que l'anneau de retenue (20) soit spécifié dans une direction axiale le long de l'axe de rotation (10) par rapport au rotor (12), et dans lequel les éléments de verrouillage de la position axiale (28, 30) interagissent dans la position de verrouillage de l'anneau de retenue (20) de manière à ce que le rotor (12) soit spécifié sur le boîtier (4) dans une direction axiale le long de l'axe de rotation (10) essentiellement sans jeu.

2. Capteur d'angle de rotation (2) selon la
revendication 1, **caractérisé en ce que**
le boîtier (4) comporte un dispositif de verrouillage du boîtier (34) correspondant au dispositif de verrouillage (18) du rotor (12), dans lequel le rotor (12) et le boîtier (4) se verrouillent l'un dans l'autre au moyen du dispositif de verrouillage du rotor (18) et du dispositif de verrouillage du boîtier (34) dans la position de montage du rotor (12) et ce verrouillage est assuré par l'anneau de retenue (20), et dans lequel l'anneau de retenue (20) avec l'élément de verrouillage (22) en position de verrouillage engage le dispositif de verrouillage du rotor (18) de telle sorte que le verrouillage du rotor (12) et du carter (4) est assuré.

3. Capteur d'angle de rotation (2) selon la
revendication 1 ou 2, **caractérisé en ce que**
l'anneau de retenue (20) et le dispositif de verrouillage du rotor (18) comportent des moyens de transmission de couple correspondant l'un à l'autre, les moyens de transmission de couple étant conçus de telle sorte qu'un couple autour de l'axe de rotation (10) puisse être transmis au moyen des moyens de transmission de couple.

4. Capteur d'angle de rotation (2) selon l'une des
revendications 1 à 3, **caractérisé en ce que**
le dispositif de verrouillage du rotor (18) et/ou l'anneau de retenue (20) est/sont fabriqué(s) en une seule pièce avec le rotor (12).

5. Capteur d'angle de rotation (2) selon la
revendication 4, **caractérisé en ce que**
le dispositif de verrouillage du rotor (18) et/ou l'anneau de retenue (20) est/sont constitué(s) d'une pièce en plastique, dans laquelle le dispositif de verrouillage du rotor (18) ou l'anneau de retenue (20) entoure le rotor (12) de manière à ce que, dans la position de montage du rotor (12), d'une part, le stator soit protégé d'un contact direct avec le rotor (12) et, d'autre part, un contrôle visuel de la position du rotor (12) soit possible.

6. Capteur d'angle de rotation (2) selon l'une des revendications 1 à 5, **caractérisé en ce que**
le dispositif de verrouillage du rotor (18), l'anneau de retenue (20) et le boîtier (4) sont conçus pour être alignés les uns par rapport aux autres de manière à ce que la liaison du rotor (12) au boîtier (4) puisse être vérifiée visuellement dans la position de montage du rotor (12).

7. Capteur d'angle de rotation (2) selon l'une des revendications 1 à 6, **caractérisé en ce que**
le dispositif de verrouillage du rotor (18) et/ou l'anneau de retenue (20) est/sont conçu(s) de telle sorte que le dispositif de verrouillage du rotor (18) et/ou l'anneau de retenue (20) peut/peuvent être fabriqué(s) dans un processus de moulage par injection sans l'utilisation de glissières.

8. Capteur d'angle de rotation (2) selon l'une des
revendications 1 à 7, **caractérisé en ce que**
le dispositif de verrouillage du rotor (18) et l'anneau de retenue (20) comportent des moyens de réglage (40, 42) correspondant l'un à l'autre pour aligner automatiquement l'anneau de retenue (20) par rapport au dispositif de verrouillage du rotor (18) lors de la transposition de ce dernier dans sa position de verrouillage.

9. Capteur d'angle de rotation (2) selon l'une des
revendications 1 à 8, **caractérisé en ce que**
le dispositif de verrouillage du rotor (18) et/ou l'anneau de retenue comportent des réservoirs de lubrifiant (44) remplis de lubrifiant et disposés de manière à favoriser le mouvement du rotor (12) par rapport au boîtier (4).

10. Capteur d'angle de rotation (2) selon l'une des
revendications 1 à 9, **caractérisé en ce que**
les éléments de verrouillage (24) de l'anneau de retenue (20) sont des crochets de verrouillage, les éléments de verrouillage (26) du dispositif de verrouillage du rotor (18) sont des ouvertures de verrouillage et les éléments de verrouillage de la position axiale (28, 30) de l'assemblage de rotor (16) sont des saillies et/ou des épaulements disposés sur le dispositif de verrouillage du rotor (18) et sur

11. Capteur d'angle de rotation (2) selon l'une des revendications 1 à 9, **caractérisé en ce que**
les éléments de verrouillage (24) de l'anneau de retenue (20) sont des éléments pressés, les éléments de verrouillage (26) du dispositif de verrouillage du rotor (18) sont des ouvertures pressées et les éléments de verrouillage de la position axiale (28 ; 30) de l'assemblage de rotor (16) sont des saillies et/ou des épaulements disposés sur le dispositif de verrouillage du rotor (18) et sur l'anneau de retenue (20).

12. Capteur d'angle de rotation (2) selon l'une des revendications 1 à 11, **caractérisé en ce que**
l'anneau de retenue (20) est conçu comme un élément de détermination de l'angle de rotation, de préférence comme une roue dentée initiale.
